(19) Europäisches Patentamt
European Patent Office
Office européen des brevets

(11) **EP 2 576 257 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **11717949.9**

(22) Anmeldetag: **27.04.2011**

(51) Int Cl.:
***B60K 7/00*** *(2006.01)*

(86) Internationale Anmeldenummer:
**PCT/EP2011/002102**

(87) Internationale Veröffentlichungsnummer:
**WO 2011/150998 (08.12.2011 Gazette 2011/49)**

(54) **VERFAHREN ZUM BETREIBEN ZWEIER ANTRIEBE SOWIE KRAFTFAHRZEUG MIT ZWEI ANTRIEBEN, DIE AUF VONEINANDER ENTKOPPELTE RÄDER ARBEITEN**

METHOD FOR OPERATING TWO DRIVES AND MOTOR VEHICLE HAVING TWO DRIVES, WHICH OPERATE ON WHEELS DECOUPLED FROM EACH OTHER

PROCÉDÉ DE FONCTIONNEMENT DE DEUX MOTEURS ET VÉHICULE AUTOMOBILE ÉQUIPÉE DE DEUX MOTEURS ENTRAÎNANT DES ROUES DÉSACCOUPLÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2010 DE 102010021996**

(43) Veröffentlichungstag der Anmeldung:
**10.04.2013 Patentblatt 2013/15**

(73) Patentinhaber: **Audi AG**
**85045 Ingolstadt (DE)**

(72) Erfinder:
• **WEIN, Michael**
**92358 Seubersdorf (DE)**
• **MEISSNER, Tim**
**85053 Ingolstadt (DE)**

(74) Vertreter: **Wohnert, Dietmar**
**Audi AG**
**Patentabteilung**
**85045 Ingolstadt (DE)**

(56) Entgegenhaltungen:
**GB-A- 2 351 716     US-A1- 2008 071 451**

**Beschreibung**

Die Erfindung befasst sich mit einem Verfahren zum Betreiben zweier, insbesondere elektrischer, Antriebe, welche auf voneinander entkoppelte Räder eines Kraftfahrzeugs arbeiten, insbesondere an unterschiedlichen Seiten des selben. Sie betrifft auch ein entsprechendes Kraftfahrzeug.

Ausgegangen ist vorliegend davon, dass eine Steuereinheit in dem Kraftfahrzeug den Antrieben ein jeweils von diesen aufzubringendes Soll-Drehmoment zuteilt. Diese Steuereinheit ermittelt ein insgesamt aufzubringendes Gesamtdrehmoment und teilt dieses in die Soll-Drehmomente auf. Bei Geradeausfahrt teilt sich das Gesamtdrehmoment im Regelfall genau hälftig in die Soll-Drehmomente für die beiden Antriebe an den unterschiedlichen Seiten des Kraftfahrzeugs auf. Bei Kurvenfahrten kann das Soll-Drehmoment an dem kurvenäußeren Rad im Vergleich zur hälftigen Aufteilung erhöht werden.

Hierbei ist angenommen, dass die beiden Antriebe baugleich sind.

Es kann nun sein, dass aufgrund von durch Toleranzen ermöglichten Unterschieden in den Antrieben das selbe Steuersignal bei dem einen Antrieb das Aufbringen eines höheren Drehmoments bewirkt als bei einem anderen Antrieb. Während bei miteinander gekoppelten Rädern Differenziale vorgesehen sind, um einen Ausgleich zu bewirken, muss vorliegend ein Ausgleich künstlich bewirkt werden, nämlich durch die Steuereinheit selbst. Diese Steuereinheit muss dann Zuteilungsfaktoren kennen, z. B. sind diese Zuteilungsfaktoren im Regelfall gleich 0,5. Bei einer Abweichung hingegen erhält der schwächere Antrieb einen höheren Zuteilungsfaktor von z. B. 0,55 und der stärkere Antrieb einen kleineren Zuteilungsfaktor von z. B. 0,45.

Damit das Steuergerät diese Zuteilungsfaktoren kennt, müssen die elektrischen Antriebe bisher vor dem Einbau in das Kraftfahrzeug aufwändig vermessen (kalibriert) werden. Aufgrund der Messwerte werden dann die Zuteilungsfaktoren in dem Steuergerät festgelegt.

Das aufwändige Vermessen vor dem Einbau ist nachteilig. Nachteilig ist außerdem, dass einer nachträglichen Änderung in den Eigenschaften der elektrischen Antriebe nicht Rechnung getragen wird.

Die gattungsbildende US 2008/0071451 A1 beschreibt ein Fahrzeug, bei welchem jedem der vier Räder ein eigener Antriebsmotor zugeordnet ist. Ein Steuergerät steuert die Motoren an, so dass diese bestimmte Antriebskräfte aufbringen. Im Steuergerät werden Messwerte, etwa des Lenkwinkels und der Gierrate des Fahrzeugs übermittelt. Das Steuergerät berechnet auch zu Zielwerten der auf die Räder wirkenden dynamischen Antriebskräfte die Gierrate des Fahrzeugs, dessen Schwimmwinkel und die Schräglaufwinkel jedes Rads.

Die GB 2 351 716 A beschreibt ein Fahrzeug, dessen Rädern jeweilige Antriebsmotoren zugeordnet sind, die von einem Steuergerät angesteuert werden. Um ein Durchdrehen der Räder zu verhindern werden maximale Drehmomente, welche die Räder aufbringen, in Abhängigkeit von einer Neigung des Fahrzeugs, einer Gewichtsverteilung und dem Lenkwinkel eingestellt.

Es ist Aufgabe der Erfindung, die Nachteile des Standes der Technik zu beseitigen und ein Verfahren nach dem Oberbegriff des Patentanspruchs 1 bereitzustellen, bei dem auf besonders wirksame Weise Abweichungen in den Eigenschaften der beiden Antriebe Rechnung getragen wird. Zur Aufgabe gehört auch das Bereitstellen der entsprechenden Mittel zur Verwirklichung des erfindungsgemäßen Verfahrens.

Die Aufgabe wird hinsichtlich des Verfahrens durch den Gegenstand des Patentanspruchs 1 gelöst und hinsichtlich der Mittel durch ein Kraftfahrzeug mit den Merkmalen gemäß Patentanspruch 4 gelöst.

Erfindungsgemäß wird anhand zumindest einer Messgröße, und zwar insbesondere eine Mehrzahl von Malen, ermittelt, welcher Ist-Zustand sich zu welchem jeweiligen Soll-Zustand jeweils einstellt. Aufgrund der Messwerte werden dann Zuteilungsfaktoren betreffend die Soll-Drehmomente für die beiden Antriebe zueinander festgelegt.

Es ist Erkenntnis der Erfinder der vorliegend beanspruchten Idee, dass während des laufenden Betriebs des Kraftfahrzeugs geeignete Messwerte gewonnen werden können, durch die eine Aussage über das bestehende Ungleichgewicht zwischen den beiden (elektrischen) Antrieben gewonnen werden kann.

Grundsätzlich kann hierbei mit Schätzungen gearbeitet werden. Z. B. kann ein statistisches Mittel zu bestimmten Größen wie z. B. der Querbeschleunigung etc. gewonnen werden, ggf. in Abhängigkeit von der Fahrzeuggeschwindigkeit.

Besonders präzise ist jedoch folgende Vorgehensweise: Eine Messgröße ist ein an einer Lenkhandhabe des Kraftfahrzeugs eingestellter Lenkwinkel. Eine weitere Messgröße ist eine in Abhängigkeit von diesem Lenkwinkel variierende Größe. Nun ist diese Abhängigkeit bekannt. Das Ausmaß der Abweichung eines Soll-Werts für die weitere Messgröße bei dem gemessenen Lenkwinkel von dessen Ist-Wert geht dann in die Zuteilungsfaktoren ein.

Bei diesem Aspekt beruht die Erfindung auf der Erkenntnis, dass sich ein Ungleichgewicht zwischen den beiden Antrieben, das durch die Zuteilungsfaktoren nicht ausgeglichen wird, in einer Drehung des Kraftfahrzeugs widerspiegelt. Auch das Einstellen des Lenkwinkels spiegelt sich in der Drehung wider. Misst man dann Größen, die vom Lenkwinkel abhängig sind, so erfasst man gleichzeitig die Folgen der durch das Ungleichgewicht eingetragenen Drehung. Beispielsweise ist die weitere Messgröße bevorzugt eine Querbeschleunigung des Kraftfahrzeugs und/oder auch eine Giergeschwindigkeit des Kraftfahrzeugs.

Das erfindungsgemäße Kraftfahrzeug weist einen ersten Antrieb auf, der auf ein erstes Rad an einer linken Seite des Kraftfahrzeugs arbeitet, und einen zweiten Antrieb, der auf ein zweites Rad an einer rechten Seite des Kraftfahrzeugs arbeitet, und es weist eine Steuereinrichtung zum Zuteilen von Drehmoment zu den Antrieben mit vorbestimmten Zuteilungsfaktoren (bezogen auf ein Gesamtdrehmoment) auf. Erfindungsgemäß ist die Steuereinrichtung dazu ausgelegt, anhand zumindest einer Messgröße, insbesondere eine Mehrzahl von Malen, zu ermitteln, welcher Ist-Zustand sich zu welchem jeweiligen Soll-Zustand einstellt, und dazu, bei zumindest einer Fahrt gewonnene Messwerte der Messgröße auszuwerten und in Abhängigkeit von diesen die Zuteilungsfaktoren festzulegen.

Auch hier sind die Messwerte bevorzugt auf den Lenkwinkel und eine weitere Größe wie die Querbeschleunigung und die Giergeschwindigkeit des Kraftfahrzeugs bezogen. Durch die Erfindung kann noch nach dem Einbau der Antriebe ein Ungleichgewicht zwischen deren Eigenschaften erfasst werden. Dies gilt insbesondere auch für ein solches Ungleichgewicht, das erst nach und nach durch den Betrieb entsteht.

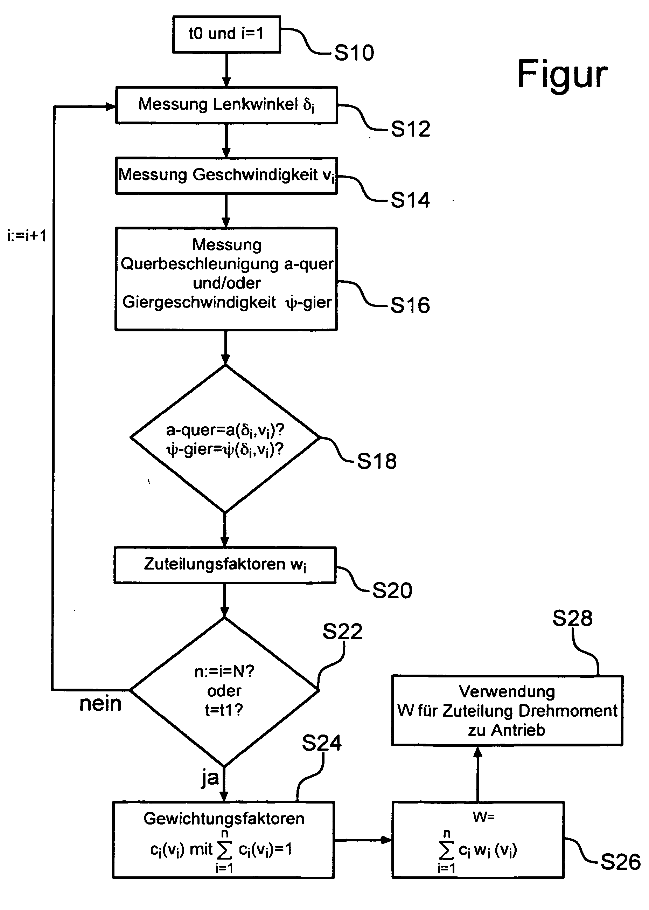

Nachfolgend wird eine bevorzugte Ausführungsform der Erfindung unter Bezug auf die Zeichnung beschrieben, in der die einzige

Figur ein Flussschaubild zur Erläuterung einer Ausführungsform des erfindungsgemäßen Verfahrens ist.

Bei dem erfindungsgemäßen Verfahren ist davon ausgegangen, dass ein in der Zeichnung nicht gezeigtes Kraftfahrzeug an einem linken Rad über einen elektrischen Antrieb verfügt und an einem rechten Rad über einen elektrischen Antrieb verfügt. Es geht bei dem erfindungsgemäßen Verfahren um das Festlegen von Zuteilungsgewichten W, für die gilt $0 < W < 1$ mit W insbesondere ungefähr gleich 0,5. Soll von den beiden Antrieben gemeinsam ein Soll-Drehmoment M aufgebracht werden, so wird von dem ersten Antrieb das Soll-Drehmoment $W \cdot M$ angefordert, von dem zweiten Antrieb das Soll-Drehmoment $(1-W) \cdot M$ angefordert.

Bei gleicher Bauart der Antriebe ist davon ausgegangen, dass W zunächst exakt gleich 0,5 ist.

Das erfindungsgemäße Verfahren beginne zu einem Zeitpunkt t0 in Schritt S10, wobei ein Zähler i auf den Wert 1 gesetzt wird.

Nachfolgend wird bei bestimmten Ereignissen immer wieder die Abfolge der Schritte S12 bis S22 ausgelöst. Alternativ können die Schritte S12 bis S22 auch gewissermaßen kontinuierlich immer wieder durchlaufen werden.

In Schritt S12 wird der an einer Lenkhandhabe des Kraftfahrzeugs (Lenkrad) eingestellte Lenkwinkel $\delta_i$ gemessen. In Schritt S14 wird sodann die aktuelle Geschwindigkeit $v_i$ gemessen.

Ferner wird in Schritt S16 durch einen geeigneten Sensor die Querbeschleunigung a-quer oder auch alternativ oder zusätzlich die Giergeschwindigkeit $\dot{\psi}$-gier gemessen.

Bei dem erfindungsgemäßen Kraftfahrzeug müsste sich nun die Querbeschleunigung a-quer in Abhängigkeit vom Lenkwinkel $\delta_i$ und der Geschwindigkeit $v_i$ auf einen bestimmten Wert $a(\delta_i, v_i)$ einstellen. Genauso müsste sich die Giergeschwindigkeit $\omega$-gier auf einen Wert $\omega(\delta_i, v_i)$ einstellen.

In Schritt S18 wird nun zu allen in Schritt S16 gemessenen Größen geprüft, ob der tatsächlich gemessene Wert dem theoretischen Wert entspricht.

Insofern dies der Fall ist, ist nichts weiter zu tun, dieser Aspekt des Verfahrens ist in der Zeichnung nicht dargestellt. Vorliegend ist davon ausgegangen, dass grundsätzlich eine zumindest minimale Abweichung zwischen a-quer und $a(\delta_i, v_i)$ bzw. $\dot{\psi}$-gier und $\omega(\delta_i, v_i)$ besteht.

Es lässt sich nun quantitativ aufgrund eines Modells ermitteln, inwieweit die Abweichung zwischen a-quer und $a(\delta_i, v_i)$ in der Ist-Querbeschleunigung zur Soll-Querbeschleunigung auf ein Ungleichgewicht zwischen den beiden elektrischen Antrieben zurückzuführen ist. Es werden in Schritt S20 Zuteilungsfaktoren $w_i$ berechnet, die bevorzugt derart festgelegt sind, dass bei einer Gewichtung der Drehmomente unter Verwendung dieser Zuteilungsfaktoren $w_i$ als Zuteilungsfaktoren W sich eine zum Lenkwinkel $\delta$ zur Geschwindigkeit v passende Querbeschleunigung a-quer oder Giergeschwindigkeit $\dot{\psi}$-gier einstellen würde. Es ist hierbei darauf hinzuweisen, dass sich bei einer Änderung der Zuteilungsfaktoren eine Drehung möglicherweise nicht mehr ergibt, die sich sonst ergeben würde. Es kann dann sein, dass sich auch eine Änderung im Lenkwinkel $\delta_i$ dadurch ergibt, dass der Fahrer nicht mehr gegensteuern muss. Aus diesem Grund wird immer das Verhältnis zwischen der weiteren Größe der Querbeschleunigung a-quer oder Giergeschwindigkeit $\dot{\psi}$-gier zum Lenkwinkel $\delta_i$ bzw. die funktionale Abhängigkeit betrachtet und nicht eine dieser Größen absolut.

In Schritt S22 wird nun geprüft, ob der aktuelle Zählerstand für die Zählergröße i, den wir als n bezeichnen wollen, gleich einem Endstand ist, dass also die Schritte S12 bis S20 N mal durchlaufen worden sind. Zusätzlich oder alternativ kann geprüft werden, ob eine vorbestimmte Zeitdauer verstrichen ist, also z. B. die Zeit t1 erreicht worden ist. Grund hierfür ist, dass ein Abbruchkriterium für das Verfahren gegeben sein muss. Da das Entstehen von bestimmten Situationen, in denen die Zuteilungsfaktoren $w_i$ bestimmt werden können, von der Häufigkeit des Betriebs des Kraftfahrzeugs einerseits und der Art und Weise, wie es sein Fahrzeugführer betreibt, andererseits abhängig ist, können beide Abbruchkriterien auch parallel vorliegen.

Sofern das Abbruchkriterium in Schritt S22 als nicht vorliegend erkannt wird, wird der Zähler um einen Zahlwert hochgesetzt. Zu einem gegenüber dem bisherigen Zeitpunkt späteren Zeitpunkt setzen die Schritte S12, S14 etc. wieder ein. Es erhöht sich somit insgesamt der Zähler i, aber auch die aktuelle Zeit t.

Das Abbruchkriterium soll so gewählt sein, dass in ausreichender Häufigkeit Zuteilungsfaktoren $w_i$ zur Verfügung stehen, damit eine zuverlässige Aussage gemacht werden kann.

In einem Schritt S24 werden nun Gewichtungsfaktoren $c_i(v_i)$ festgelegt, zu sämtlichen Zuteilungsfaktoren $w_i$, die bisher ermittelt worden sind. Grund hierfür ist, dass man nachfolgend einen endgültigen Zuteilungsfaktor W berechnen möchte, und die Gewichtungsfaktoren hängen naturgemäß von der Anzahl der Durchläufe der Schritte S12 bis S22 und daher der Zahl der Zuteilungsfaktoren $w_i$ ab. Im einfachsten Fall ist der Gewichtungsfaktor genau gleich 1/n. Bevorzugt wird hier eine Geschwindigkeitsabhängigkeit eingebracht, denn die Messwerte, die bei höheren Geschwindigkeiten $v_i$ gewonnen werden, sind besonders aussagekräftig. Gleichzeitig wird bevorzugt eine höhere Gewichtung vorgesehen für solche Zuteilungsfaktoren $w_i$, die bei Anforderung eines besonders hohen Drehmoments gewonnen wurden, da hier eine kleine prozentuale Abweichung zu einer starken Fahrzeugreaktion führt. Sind die Zuteilungsfaktoren $w_i$ so gewählt, dass sie grundsätzlich als Zuteilungsfaktor W verwendbar wären, sind die Gewichtungsfaktoren $c_i(v_i)$ bevorzugt so gewählt, dass die Summe

$$\sum_{i=1}^{n} c_i(v_i)$$ gleich 1 ist.

Es wird nun W berechnet zu

$$W = \sum_{i=1}^{n} c_i w_i(v_i)\,,$$ siehe Schritt S26.

Diese Größe W wird nachfolgend verwendet, um Drehmoment zu dem einen Antrieb zuzuteilen, für den anderen Antrieb wird der Zuteilungsfaktor 1-W verwendet.

Das erfindungsgemäße Verfahren kann - dies ist in der Figur nicht gezeigt - grundsätzlich ständig wiederholt werden, wobei jeweils der aktuelle Zuteilungsfaktor W eingesetzt wird und regelmäßig durch einen neuen Zuteilungsfaktor W' ersetzt wird. Dadurch kann bei laufendem Betrieb des Kraftfahrzeugs der Zuteilungsfaktor stets neu eingestellt werden, damit sich im Betrieb des Kraftfahrzeugs ergebende Änderungen in den Eigenschaften der Antriebe unmittelbar in den Zuteilungsfaktoren widerspiegeln und das Kraftfahrzeug dauerhaft betriebssicher fährt - nämlich so, dass auf möglichst präzise Weise die Querbeschleunigung und die Giergeschwindigkeit optimal auf den Lenkwinkel abgestimmt sind. Mit anderen Worten wird keine Drehung in das Kraftfahrzeug eingetragen, die der Fahrzeugführer nicht wünscht, bzw. der Fahrzeugführer muss auch nicht gegenlenken, um eine Drehung zu verhindern.

## Patentansprüche

**1.** Verfahren zum Betreiben zweier Antriebe, welche auf voneinander entkoppelte Räder eines Kraftfahrzeugs arbeiten, bei dem eine Steuereinheit zur Erzielung eines Soll-Zustands Signale an die Antriebe sendet, durch die ein von diesen jeweils aufzubringendes Soll-Drehmoment angefordert wird, **dadurch gekennzeichnet, dass** anhand zumindest einer Messgröße, insbesondere eine Mehrzahl von Malen, ermittelt wird, welcher Ist-Zustand sich zu welchem jeweiligen Soll-Zustand einstellt, und dass aufgrund eines Messwerts oder von Messwerten zu der zumindest einen Messgröße Zuteilungsfaktoren betreffend die Soll-Drehmomente für die beiden Antriebe zueinander festgelegt werden.

**2.** Verfahren nach Anspruch 1, **dadurch gekennzeichnet, dass** eine Messgröße ein an einer Lenkhandhabe des Kraftfahrzeugs eingestellter Lenkwinkel ($\delta_i$) ist und eine weitere Messgröße eine in Abhängigkeit vom Lenkwinkel variierende Größe (a-quer, $\dot{\psi}$ -gier) ist, wobei das Ausmaß der Abweichung eines Soll-Werts (a($\delta_i$, $v_i$),. $\omega(\delta_i$, $v_i$)) für die weitere Messgröße bei dem gemessenen Lenkwinkel ($\delta_i$) von dessen Ist-Wert (a-quer, $\dot{\psi}$ -gier) in die Zuteilungsfaktoren eingeht.

**3.** Verfahren nach Anspruch 2, **dadurch gekennzeichnet, dass** die weitere Messgröße eine Querbeschleunigung (a-quer) des Kraftfahrzeugs und/oder eine Giergeschwindigkeit ($\dot{\psi}$ -gier) des Kraftfahrzeugs ist.

**4.** Kraftfahrzeug mit einem ersten Antrieb, der auf ein erstes Rad an einer linken Seite des Kraftfahrzeugs arbeitet, und mit einem zweiten Antrieb, der auf ein zweites Rad an einer rechten Seite des Kraftfahrzeugs arbeitet, und mit einer Steuereinrichtung zum Zuteilen von Drehmoment zu den Antrieben mit vorbestimmten Zuteilungsfaktoren, **dadurch gekennzeichnet, dass** die Steuereinrichtung dazu ausgelegt ist, anhand zumindest einer Messgröße, insbesondere eine Mehrzahl von Malen, zu ermitteln, welcher Ist-Zustand sich zu welchem jeweiligen Soll-Zustand einstellt, und dazu, bei zumindest einer Fahrt gewonnene Messwerte der Messgröße auszuwerten und in Abhängigkeit von diesen die Zuteilungsfaktoren festzulegen.

## Claims

**1.** Method for operating two drives which operate on mutually decoupled wheels of a motor vehicle, in which a control unit transmits signals to the drives to achieve a desired state, by means of which a desired torque to be generated by each of the drives is requested, **characterised in that** based on at least one measurement variable, it is determined, in particular a number of times, which actual driving state is set to which respective desired state, and **in that** on the basis of a measurement value or measurement values relating to the at least one measurement variable allocation factors relating to the desired torques of the two drives relative to one another are determined.

2. Method according to claim 1, **characterised in that** one measurement variable is a steering angle ($\delta_i$) set by a steering member of the motor vehicle and an additional measurement variable is a variable (a-transverse, $\psi$-yaw) that varies as a function of the steering angle, wherein the magnitude of the deviation of a desired value (a ($\delta_i$, $v_i$), $\omega(\delta_i$, $v_i$) for the additional measurement variable at the measured steering angle ($\delta_i$) from its actual value (a-transverse, $\psi$-yaw) enters into the allocation factors.

3. Method according to claim 2, **characterised in that** the additional measurement variable is a transverse acceleration (a-transverse) of the motor vehicle and/or a yaw velocity ($\psi$-yaw) of the motor vehicle.

4. Motor vehicle comprising a first drive, which operates on a first wheel on a left side of the vehicle and a second drive which operates on a second wheel on a right side of the vehicle, and comprising a control device for allocating torque to the drives with predetermined allocation factors, **characterised in that** the control device is configured to determine by means of at least one measurement variable, in particular a number of times, which actual state is set to which respective desired state, and in addition to evaluate measurement values of the measurement variable obtained during at least one journey and to define the allocation factors as a function thereof.

**Revendications**

1. Procédé de fonctionnement de deux dispositifs moteurs qui agissent sur des roues désaccouplées d'un véhicule automobile, selon lequel une unité de commande envoie des signaux aux dispositifs moteurs pour atteindre un état de consigne, signaux par lesquels est demandé un couple de consigne à appliquer respectivement par ceux-ci,
**caractérisé en ce que** l'on détermine à l'aide d'au moins une grandeur mesurée, notamment plusieurs fois, quel état réel s'installe pour quel état de consigne respectif et **en ce que**, à l'aide d'une valeur mesurée ou de plusieurs valeurs mesurées, on fixe pour l'au moins une grandeur mesurée des facteurs d'attribution concernant les couples de consigne pour les deux dispositifs moteurs.

2. Procédé selon la revendication 1, **caractérisé en ce qu'**une grandeur mesurée est un angle de braquage

($d_i$) réglé sur une manette de direction du véhicule automobile et une autre grandeur mesurée est une grandeur (a-quer, ?-gier) variable en fonction de l'angle de braquage, la dimension de l'écart entre une valeur de consigne (a($d_i$,$v_i$), ?($d_i$, $v_i$)) pour l'autre grandeur mesurée pour l'angle de braquage mesuré ($d_i$) et sa valeur réelle (a-quer, ? -gier) entrant alors dans les facteurs d'attribution.

3. Procédé selon la revendication 2, **caractérisé en ce que** l'autre grandeur mesurée est une accélération transversale (a-quer) du véhicule automobile et/ou une vitesse de mise en lacet (? -gier) du véhicule automobile.

4. Véhicule automobile avec un premier dispositif moteur, qui agit sur une première roue au niveau d'un côté gauche du véhicule automobile et avec un deuxième dispositif moteur qui agit sur une deuxième roue d'un côté droit du véhicule automobile, et avec un dispositif de commande pour attribuer des couples aux dispositifs moteurs avec des facteurs d'attribution prédéterminés,
**caractérisé en ce que** le dispositif de commande est conçu pour déterminer à l'aide d'au moins une grandeur mesurée, notamment plusieurs fois, quel état réel s'installe pour quel état de consigne respectif et en plus pour évaluer des valeurs mesurées de la grandeur mesurée qui ont été obtenues lors d'au moins un trajet et fixer les facteurs d'attribution en fonction desdites valeurs mesurées.

# Figur

```
            ┌──────────────┐
            │  t0 und i=1  │──╮ S10
            └──────┬───────┘
                   │
          ┌────────▼─────────────┐
          │ Messung Lenkwinkel δᵢ │──╮ S12
          └────────┬─────────────┘
                   │
          ┌────────▼──────────────────┐
  i:=i+1  │ Messung Geschwindigkeit vᵢ │──╮ S14
          └────────┬──────────────────┘
                   │
          ┌────────▼──────────────┐
          │       Messung         │
          │ Querbeschleunigung a-quer │
          │      und/oder         │
          │ Giergeschwindigkeit ψ-gier │──╮ S16
          └────────┬──────────────┘
                   │
               ╱◇◇◇◇◇◇◇╲
              ╱ a-quer=a(δᵢ,vᵢ)? ╲
              ╲ ψ-gier=ψ(δᵢ,vᵢ)? ╱── S18
               ╲◇◇◇◇◇◇◇╱
                   │
          ┌────────▼──────────────┐
          │ Zuteilungsfaktoren wᵢ │──╮ S20
          └────────┬──────────────┘
                   │                          S28
               ╱◇◇◇◇◇◇◇╲  S22
              ╱  n:=i=N?  ╲            ┌──────────────────────┐
       nein ╲    oder     ╱           │      Verwendung       │
              ╲   t=t1?   ╱           │ W für Zuteilung Drehmoment │
               ╲◇◇◇◇◇◇◇╱            │       zu Antrieb       │
                   │ ja              └───────────▲──────────┘
                   │    S24                      │
          ┌────────▼──────────────┐   ┌──────────┴──────────┐
          │   Gewichtungsfaktoren │   │        W=           │
          │         n             │──▶│        n            │
          │ cᵢ(vᵢ) mit Σ cᵢ(vᵢ)=1 │   │       Σ cᵢ wᵢ (vᵢ)  │──╮ S26
          │        i=1            │   │       i=1           │
          └───────────────────────┘   └─────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080071451 A1
- GB 2351716 A